# EUROPEAN PATENT SPECIFICATION

(11) **EP 4 339 177 B1**
(45) Date of publication and mention of the grant of the patent: **26.11.2025**
(21) Application number: 23158847.6
(22) Date of filing: 27.02.2023
(51) Int. Cl.: C04B 35/626, C04B 33/02, C04B 33/04, C04B 33/20, B28C 1/04, B28C 1/06, C04B 33/14

(54) **METHOD FOR PRODUCING CERAMIC MICROGRANULES**
VERFAHREN ZUR HERSTELLUNG VON KERAMISCHEN MIKROGRANULATEN
PROCÉDÉ DE PRODUCTION DE MICROGRANULES CÉRAMIQUES

(30) Priority: 19.09.2022 IT 202200019209
(43) Date of publication of application: 20.03.2024
(73) Proprietor: L.B. Officine Meccaniche S.p.A., 41042 Fiorano Modenese (Modena) (IT)
(72) Inventor: CAVANI, Giuseppe, 41043 Formigine, Modena (IT)
(74) Representative: Luppi Intellectual Property S.r.l.

(56) References cited:
- EP-B1- 3 515 877
- CN-A- 106 182 407
- CN-A- 110 407 587
- CN-B- 101 121 282
- CN-B- 103 113 133

## Description

The invention relates to a method for producing ceramic microgranules arranged for constituting the body of ceramic tiles once they have been formed by pressing.

As in all industrial sectors, also in the field of the production of ceramic tiles, technological solutions are increasingly sought that enable energy consumption to be controlled and, in particular, the use of energy resources like thermal energy, and thus gas fuel, and process fluids, like water, to be reduced.

In order to obtain by pressing ceramic tiles having great compactness, i.e. low water absorption and great breaking strength, appropriate raw materials have to be chosen, for example raw materials that are substantially devoid of iron, reducing the dimension of the particles by grinding to increase the active surface of the components of the raw materials, mixing the ground raw materials so as to obtain uniform distribution of the various components and more intimate contact between the various components to promote vitrification during firing. Producing ceramic granules after grinding enables the ceramic tiles to be formed by pressing. In fact, the ceramic granules show greater slidability with respect to fine ceramic powders that are on the other hand difficult to move because of the high specific surface thereof. Nevertheless, the ceramic granules can also have other features like "pressability" to enable the pressed ceramic semifinished product to have sufficient compacting, measured in mechanical resistance, which enables the pressed ceramic semifinished product to be moved along a processing line as far as the firing step thereof.

As is known, the processes of managing the most common ceramic tiles can be basically divided into two types, one is known as the "dry method" and the other is indicated as the "wet method".

The aforesaid "dry method" refers to grinding raw materials without adding water. In dry grinding, the water content is the water content present in the raw materials, once they have been pre-treated, and it is generally rather low at around 2-3%. The Applicant has devised a dry process according to which, in order to obtain a ceramic tile, the dry ground powder is humidified and simultaneously granulated in a controlled manner. The humidity content of the obtained granules is 9-11% and is then taken to 4-7% by a fluid bed dryer. Through controlled granulation, a ceramic powder is obtained, known as "microgranulate" or "microgranulated powder", having a humidity content, an average particle dimension, a certain slidability and a granulometric distribution that are near those of the known "atomized powder", enabling the thus prepared microgranulated powder to be formed by pressing. Subsequently, the compacted ceramic tile, commonly known as "green", is dried and then fired in a kiln.

The aforesaid "wet method" consists of adding water to the raw materials and then grinding them in a ball grinder to obtain a liquid paste, known by the name of "slip". The humidity of the liquid paste is generally about 32-40%, hence the name "wet method". The liquid paste is spray dried in a spray dryer to obtain a powder measuring on average between 0.2 and 1 mm with a 4-7% humidity content and a substantially spherical shape of the particles, known as "atomized powderʺʺ, as indicated above. After press forming, the "green" that is thus obtained is fired in a kiln.

The drawbacks of the two methods disclosed above are known to the expert person.

Some disadvantages of the dry process are that the entire ceramic tile production process is affected by the efficiency of grinding, it can be more difficult to remove metal impurities like the metal present in the raw materials, water has to be introduced into the microgranulation step and the granulation parameters have to be checked to obtain a ceramic powder of a certain quality.

The wet process, although it enables metal impurities to be removed more easily and collapsable spherical ceramic granules to be obtained, i.e. the atomized powder, has the great disadvantage of high energy consumption, in particular in the process of producing ceramic granules by spray drying; during atomization, in fact, a great quantity of thermal energy has to be provided - this corresponding to high consumption of fuel - to reduce the humidity of the slip from the 32-40% of the liquid paste to the 4-7% of the atomized granule. A process for producing ceramic powders for the manufacture of architectural ceramics with a dry-wet technology is described in CN110407587A. This document discloses a method according to the preamble of claim 1. A semi-dry method for preparing powders for the manufacture of ceramics is described in CN101121282B.

From the above, it is clear that in the production process of the ceramic tiles, preparing the ceramic powder and producing granules suitable for being formed by pressing are phases on which the attention of researchers and technicians is focused. In order for a ceramic body mix for ceramic tiles to be able to be considered to be suitable for forming by compacting, it must satisfy at least the requirements of having a humidity content around 4-7% and having an almost spherical particles shape, so that it can be sufficiently slidable. Further, the ceramic granules have to have a certain granulometric distribution.

It is thus desirable to implement a production method for producing a ceramic powder having features that make the ceramic powder suitable for press forming but reduces energy consumption and process fluids with respect to the traditional wet method.

One object of the invention is to improve known production techniques for producing slidable ceramic material in the form of powder for manufacturing ceramic tiles.

A further object is to provide a method for producing slidable ceramic material in the form of powder that enables the advantages to be obtained of thorough mixing with wet grinding but whilst reducing energy consumption.

A still further object is to produce a slidable ceramic material in powder form having a substantially uniform composition of each grain of powder.

According to the invention, a method is provided for producing ceramic microgranules as defined by claim 1.

Owing to the invention, it is possible to produce a ceramic powder that is sufficiently slidable to feed a ceramic press by reducing the quantity of process water and thus the energy necessary to remove the water.

Owing to the method according to the invention, the ceramic microgranules that are produced have a degree of homogeneity of the composition that is at least equal to if not above what is obtainable with the known dry process.

Still owing to the invention, it is possible to obtain a ceramic granule having humidity features, apparent density, granulometry and slidability comparable with those of an atomized powder of known type obtained by atomization.

The invention can be better understood and implemented with reference to the appended drawings that illustrate some embodiments thereof by way of non-limiting example, in which:
Figure 1 is a flow chart of steps of a method for producing ceramic microgranules;
Figure 2 is a flow chart illustrating an embodiment of the method of Figure 1;
Figure 3 is a flow chart illustrating three alternative embodiments of a preparation step of a liquid mixture provided in the diagrams of Figure 1 and Figure 2;

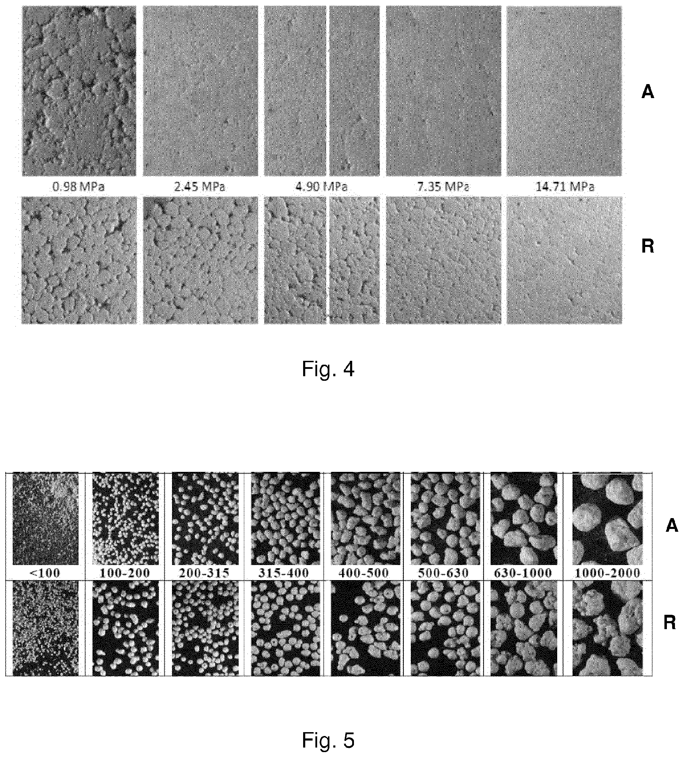

Figure 4 is a series of images of the surface of two samples of a "green" tile i.e. formed by compacting by pressing, at different pressing pressures;
Figure 5 is a series of images illustrating the form of different granulometric fractions of ceramic microgranules alongside images of the form of powder particles included in an atomized powder;
Figure 6 and Figure 7 are schematic frontal views of a granulating chamber according to two different configurations;
Figure 8 is a side view of the granulating chamber of Figures 6 and 7.

With reference to the Figures, the method according to the invention produces a slidable ceramic material in powder form, i.e. ceramic granules also known as "ceramic microgranules", arranged for constituting the body of ceramic tiles, thus usable in the manufacture of ceramic tiles. Ceramic "microgranules" mean a ceramic material in granules having an average dimension less than are the same as 1000 micron (1 mm) and granulometric distribution similar to that of an atomized powder of known type used in the production of ceramic tiles.

The method involves preparing a dry mixture of powders and preparing a liquid mixture or slip, both comprising a mixture of raw materials chosen and set up, in particular dosed, according to a formulation or recipe of a ceramic body mix for ceramic tiles, in particular ceramic tiles belonging to the category BIa or BIb or BIIa or BIIb according to standard UNI EN 14411. The recipe can be a ceramic body formulation for vitrified stoneware tiles. The raw materials thus comprise clays (e.g. kaolin), inerts (e.g. quartz sands) and fluxes (e.g. feldspar, carbonates).

The liquid mixture and the dry mixture are prepared on the basis of the same ceramic raw materials recipe. In other words, the type of raw materials and the percentage content of the various raw materials are the same for the liquid mixture and for the dry mixture, which differ substantially through the presence of an aqueous vehicle in the liquid mixture, which is not present in the dry mixture.

The method then granulates by particle growth the dry mixture of powders to obtain the ceramic microgranules by injecting in drop form the liquid mixture onto the dry mixture of powders.

The dry mixture is a mixture of raw materials obtained by a "dry grinding" step. The "dry" grinding grinds the ceramic raw materials without adding water, in particular in a grinding apparatus, for example a vertical roller mill or a ball grinder in an air vein or by overflow. The humidity of the dry mixture, obtained by dry grinding, is generally lower than or the same as about 2 % by weight.

The step of dry grinding is for example performed with methods and systems of known type, so it will not be described in detail.

The liquid mixture is a mixture of raw materials in an aqueous vehicle. The liquid mixture is obtained by a wet preparation step that can comprise "wet grinding", according to which the mixture of raw materials is ground in an aqueous vehicle. The wet grinding occurs for example in a cylindrical mill, in particular including grinding bodies, like a ball grinder of known type. Alternatively, continuous modular mills can be used to perform the wet grinding.

From the wet grinding, an aqueous suspension of solid particles is obtained, indicated here as "liquid mixture", also commonly known as slip. An aqueous vehicle means water or a water-based liquid to which additives can be added, for example to regulate the rheological behaviour of the water solution that it is desired to prepare.

In this description, the words water, aqueous liquid and aqueous vehicle are to be considered interchangeable.

The humidity content of the liquid mixture is generally about 32-40 % by weight.

The step of wet grinding is of known type, for example performed with the same methods and systems with which ceramic paste slip to be atomized is obtained, so it will not be described in detail.

As the humidity of the original raw materials - considering an average humidity of all the raw materials of the recipe in a theoretical mixture - is greatly variable and can be up to 20% by weight or more, upstream of the dry grinding a step of drying the raw materials can be provided intended to constitute the dry mixture, to take the humidity of the raw materials to around 3% or less before being subjected to dry grinding. The humidity of the theoretical mixture is a humidity calculated as a weighted average, the raw materials not being mixed together before grinding. During the dry grinding, the humidity of the raw materials falls by about 1-1.5 percentage points.

The different amounts of humidity are contributed by the different raw materials in different amounts: part of the raw materials, in particular consisting of materials that the expert person considers to be "hard" or "non-plastic", like for example feldspar and quartz, generally has humidity that is significantly below that of the raw materials that the expert person considers to be "plastic" materials, because they have affinities with water, like for example clays and kaolin. For example, in a composition of raw materials of a recipe, the hard materials can have humidity of 6% and plastic materials can have humidity up to 23%. According to this embodiment, considering that the hard materials in this process can constitute 65% of the recipe and the plastic materials can constitute 35% of the recipe, where the composition percentages of the dry materials are expressed, the average humidity of the theoretical mixture of raw materials is 12.74%. In another embodiment, the average humidity of the theoretical mixture can be much lower, for example 4% lower. In general, the average humidity of the theoretical mixture of raw materials is preferably comprised between 7% and 20%. In this original humidity range it is possible to achieve greater saving of thermal energy and lower water consumption.

In an alternative embodiment of the method according to the invention, the liquid mixture is obtained by mixing, for example in a suitable mixing apparatus, a portion of dry mixture with a preset quantity of aqueous vehicle. In this manner, there is dry grinding of a quantity of raw materials to obtain a dry mixture of powders and there is pre-dry grinding of a further quantity of raw materials to obtain a further dry mixture and mix the aqueous vehicle with the further dry mixture.

Pre-dry grinding and dry grinding can occur simultaneously.

As the dry mixture and the further dry mixture have the same recipe, the entire recipe of raw materials can thus be dry ground and to a portion of dry ground mixture - corresponding to the dry pre-ground portion - aqueous vehicle is added and mixed therewith until it constitutes an aqueous suspension of solid particles, i.e. the liquid mixture or slip. This mixing can occur in a turbodissolver.

In a further alternative embodiment, the dry mixture can be dry-ground on the one hand, as in the similar versions and the liquid mixture can be prepared on the other hand, according to a technique that is different from wet grinding. According to this further embodiment, preparing the liquid mixture comprises:
- dividing components of the quantity of recipe intended for the liquid mixture into hard materials and into plastic materials;
- pre-dry grinding the hard materials to obtain ground dry powder from these hard materials;
- dissolving the plastic materials in an aqueous vehicle to obtain a suspension of plastic solid particles in the aqueous vehicle;
- mixing the suspension of plastic solid particles with the ground dry powder to obtain the liquid mixture.

The liquid mixture is thus obtained by mixing a suspension of plastic solid particles in aqueous vehicle with "hard" pre-dry ground raw materials. From mixing, the liquid mixture is obtained having the same recipe as the dry mixture prepared separately, naturally without the aqueous vehicle. The entire flowrate of ceramic material that is necessary to the production of ceramic microgranules is thus provided through the dry mixture and the liquid mixture, having the same recipe, the latter being obtained by mixing the two portions of the recipe processed separately and not according to the wet grinding technique. In this manner, the pre-grinding of the "hard" or "non-plastic" components of the recipe part can occur in a dry mill of smaller dimensions than the mill used to obtain the dry mixture.

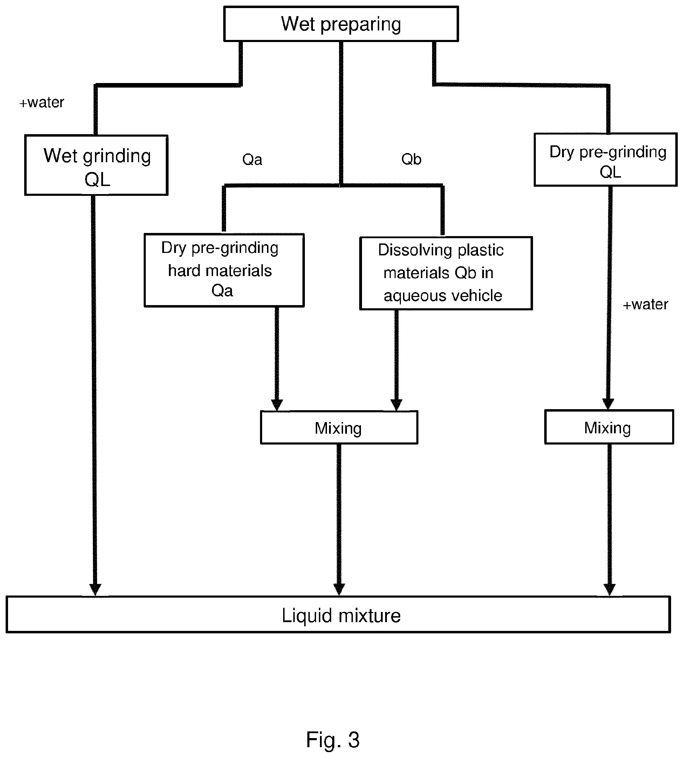

In all the embodiments disclosed and illustrated above for the preparation part of the liquid mixture in Figure 3, once the dry mixture of powders and the liquid mixture have been obtained, according to one of the techniques cited above, granulating by particle growth is performed by injecting the liquid mixture onto the dry mixture.

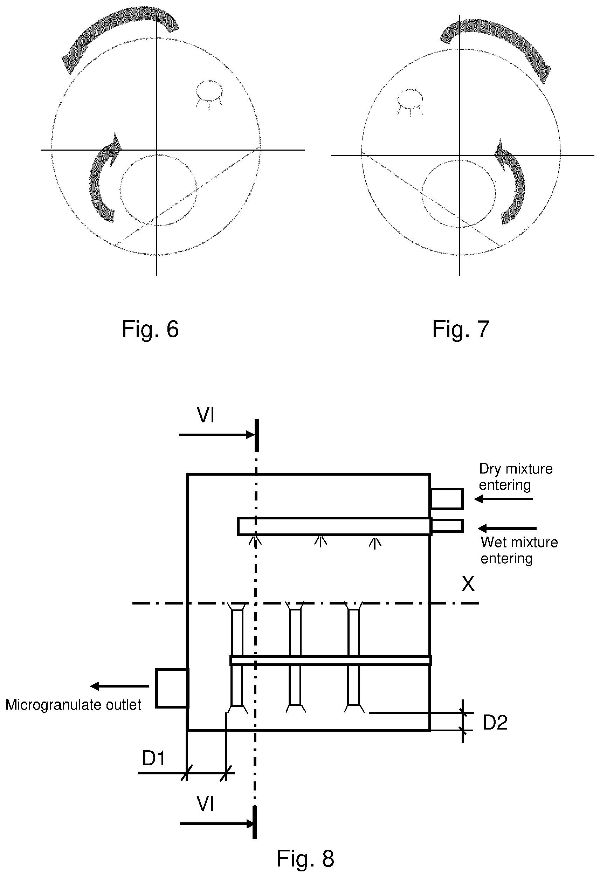

As Figures 6 and 7 show, the granulating occurs inside a granulating chamber or agglomerating chamber, for example provided in a granulating apparatus or in a granulating machine. The agglomerating chamber has a horizontal axis X and is supplied continuously with said dry mixture. The agglomerating chamber can be tilted with respect to a horizontal plane and in the method disclosed here the tilt is comprised between 0° and 2° degrees. The granulating chamber is cylindrical and rotatable around its horizontal axis X. The rotation of the granulating chamber can be anticlockwise as in the configuration of Figure 6 or clockwise as in the configuration of Figure 7. Whilst the granulating chamber rotates, the dry mixture is supplied and the liquid mixture is injected to obtain the ceramic granules by nucleation and particle growth. Also the liquid mixture is injected continuously.

The speed at which the granulating chamber rotates is between 8 and 22 rpm. The dry mixture that enters the granulating chamber forms a bed of powder that through the effect of the rotation of the granulating chamber and of gravity is arranged on a tilted plane with respect to a cross section of the granulating chamber. This is shown in Figures 6 and 7.

The quantity of liquid mixture injected into the granulating chamber is proportional to a flowrate of the dry mixture that supplies the granulating chamber. In particular, the quantity of said liquid mixture varies from 30% to 40% of the flowrate of dry mixture.

In order to permit the nucleation of powder particles of the dry mixture, the liquid mixture is injected at high pressure by nozzles. The dimension of the dispensing hole of the nozzles can be from 0.2 mm to 5 mm. Preferably, the dimension of the dispensing hole of the nozzles is comprised between 0.8 and 3 mm. The injection pressure can be from 5x10⁵ Pa (5 bar) to 100x10⁵ Pa (100 bar). Preferably, the injection pressure can vary from 25 x10⁵ Pa to 50 x10⁵ Pa (from 25 to 50 bar). In this manner, sufficiently small drops of liquid mixture form. The nozzles can be distributed along a bar arranged inside the granulating chamber, in particular parallel to the horizontal axis X of the granulating chamber.

Although the use of nozzles for injecting water is widespread in clay material granulating processes, the idea of granulating by injecting a slip at high pressure by nozzles is made possible by expedients adopted by the Applicant that overcome technical drawbacks that the person expert in granulating recognizes like the difficulty in maintaining the homogeneity of the aqueous suspension, drop control, i.e. of the dimension and composition of the drop, clogging of the nozzles and the rapid wear that they suffer.

During granulating, the powder particles of the dry mixture come into intimate contact with the water contained in the liquid mixture by generating powder agglomerates that by travelling along a path inside the granulating chamber grow to form the ceramic microgranules.

Along the path, the agglomerates encounter a stirring-disgregating element provided inside the granulating chamber having the purpose of dispersing the very fine dry powder, projecting the fine particles against one another so as to promote the increase of the number of contacts of the finer particles of powder and control the particle growth of the agglomerates that have grown excessively; this projects the finer powder in a radial direction in the granulating chamber and shatters the larger agglomerates, limiting a greater dimension of the granules during formation thereof. The stirring-disgregating element can be a bar the axis of which is parallel to the horizontal axis of the granulating chamber; in particular, the bar is provided with stirrer-disgregating arms that project radially from the bar and come into contact with the material present in the granulating chamber. Controlling the granulating process enables a ceramic material in slidable powder to be obtained that is defined as "microgranulate" or "microgranulated powder". The method disclosed has the stirring-disgregating element rotate in a direction opposite the rotation direction of the granulating chamber, thus as Figures 6 and 7 show. The counter-rotation speed at which the stirring-disgregating element is driven is for example comprised between 800 and 1800 rpm. Although it is possible for the stirring-disgregating element to rotate in a direction concord with the rotation direction of the granulating chamber, the Applicant has established experimentally that the counter-rotation of the stirring-disgregating element with respect to the rotation of the granulating chamber, at the same rotation speed, influences the granulometric distribution so as to control the maximum dimension of the microgranules, producing microgranules that are finer on average; on the other hand, by performing the granulating step with the two concord rotation directions of the stirring-disgregating element and of the granulating chamber, the Applicant has established experimentally that the ceramic material adheres more and faster to the inner walls of the granulating chamber, causing the undesired formation of stratified encrusted ceramic material or "crust" that, in order not to alter or spoil the microgranules being formed, has to be removed from the granulating chamber with greater frequency, i.e. by increasing the machine downtime to perform granulating chamber cleaning tasks.

The humidity content of the microgranules formed in the granulating step can vary between about 9 and about 14%.

The bar of the nozzles is positioned in a staggered manner with respect to the horizontal axis X and also with respect to an axis of the stirring-disgregating element. In particular, the bar of the nozzles is arranged in a quadrant above the horizontal axis X. In the configuration in which the granulating chamber rotates anticlockwise, considering the section of Figure 6, the bar of the nozzles is arranged in the top right quadrant. In the configuration in which the granulating chamber rotates clockwise, considering the view of Figure 7, the bar of the nozzles is arranged in the top left quadrant.

Further, the distance D1 between an end arm of the stirring-disgregating element, nearer the outlet of the formed ceramic microgranules, and the end closing rear wall of the granulating chamber is in particular comprised between 140 and 190 mm.

The minimum radial distance D2 between an end arm of the stirring-disgregating element, and the cylindrical lateral wall of the granulating chamber is in particular comprised between 20 and 30 mm.

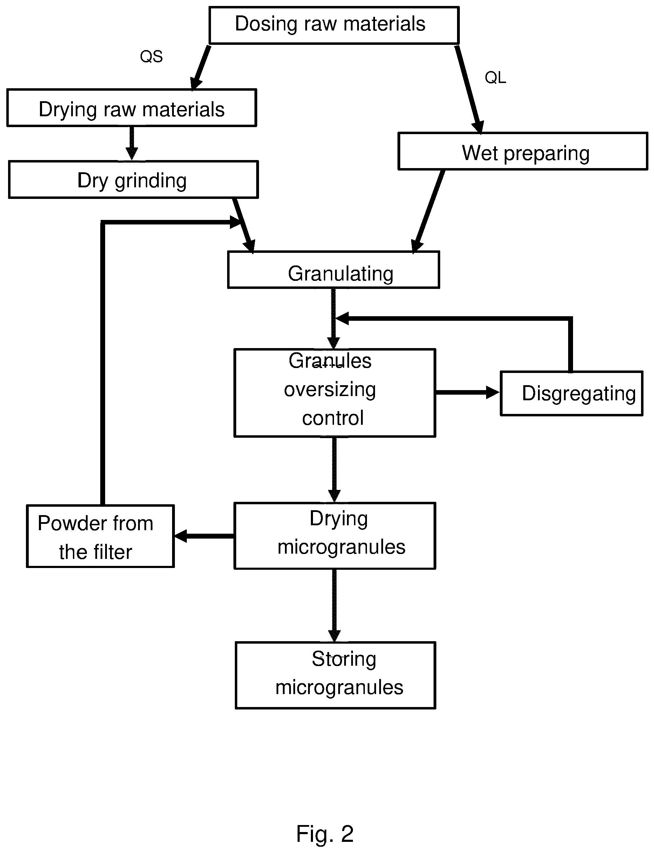

In an embodiment of the method disclosed shown in Figure 2, after the granulating step the granulometry of the ceramic microgranules is checked. Checking the granulometry comprises:
- separating a fraction of overdimensioned granules having dimensions above a certain threshold from checked ceramic microgranules;
- disgregating the overdimensioned ceramic granules to obtain disaggregated granules;
- adding the disaggregated granules to ceramic microgranules to be checked.
The operation of separating the overdimensioned granules can be performed by a control screen that can be a rotating screen. The step of checking the granulometry has the sole function of selecting the granules above a given dimension, which generally make up a smaller fraction than most of the ceramic granules.

In other words, the method involves recovering part of the ceramic material in slidable powder that has an excessive dimension, reducing the dimensions thereof and introducing ceramic material in slidable powder again into the process together with the ceramic microgranules formed by granulation.

Alternatively, in one embodiment that is not shown the disaggregation of the overdimensioned ceramic granules also known as overscreen material, can occur after a drying step of drying the ceramic microgranules.

Following granulation, the ceramic microgranules are dried to obtain the slidable ceramic material in granular powder form, suitable for supplying a ceramic press for forming ceramic tiles. Drying or reducing the humidity content can occur in a fluid bed dryer.

Figure 2 shows one embodiment that involves a further step of recovering ceramic material; in this case the recovered material is excessively fine and corresponds to ceramic material captured by the filter of the dryer that performs the step of reducing the humidity content of the ceramic granules. The recovered material is returned to the start of the granulation step to combine with the dry mixture to be granulated.

From the above, it follows that the raw materials must first be treated according to steps preceding granulation that comprise, in addition to dry grinding and wet preparation, also dosing. The method according to the invention does not involve the raw materials of the recipe being mixed upstream of grinding. The intimate mixing of the raw materials occurs during grinding, in both the methods of dry or wet grinding, or during a step following dry grinding, as in the embodiments in which pre-dry ground fractions are mixed with the aqueous vehicle.

As already indicated above, the part prepared wet, in particular the wet ground part, and the dry ground part, have the same ceramic body mix recipe. The ceramic microgranules are obtained by placing in contact a recipe of raw materials that are wet ground or prepared wet with the same recipe as dry ground raw materials, dosed according to preset proportions. For example, granulation can be performed using from 60% to 73% in weight of dry-ground recipe and injecting from 27% to 40% in weight of the same recipe that is wet ground or obtained with a wet preparation. The weight percentages refer to the solid material, i.e. the percentage of the liquid mixture does not include the aqueous vehicle. The percentages in weight of dry mixture and of wet mixture are influenced by the humidity that is necessary for the determined ceramic mix recipe to be able to granulate, i.e. to be able to form the desired ceramic microgranules.

When raw materials are prepared wet, a liquid mixture is obtained. Subsequently, the liquid mixture is injected onto the dry mixture in the form of fine droplets; the presence of a large quantity of water in the liquid mixture activates the binding effect of the clays present in both the dry mixture and in the liquid mixture and in the dry mixture nuclei of particles form that agglomerate other adjacent particles, making the nucleus grow and forming ceramic granules.

As, with the exception of the aqueous vehicle, the dry mixture and the liquid mixture have the same composition as the set recipe, the ceramic granules produced are extremely homogeneous in terms of composition.

In one wet method of traditional type, the slip is spray-dried in an atomizer to obtain atomized powder. All versions of the method according to the invention use the slip as an agglomerating fluid during a subsequent step of granulating the dry mixture by particle growth.

The method according to the invention is thus proposed as an alternative method that enables spray-drying of the slip to be avoided, i.e. atomization, thus limiting energy consumption enormously.

Not only energy but also water is saved; in fact, the quantity QL of liquid mixture to be prepared is less than what is necessary for atomization, because at the same flowrate of ceramic microgranules produced a considerable part QS consisting of the ceramic body mix is prepared according to the dry method. Further, the water used for preparing the liquid mixture is not subsequently lost through evaporation, as in atomization, but is used by the part QS of dry mixture to permit the microgranulation, which would, alternatively, require water to be added.

Ceramic granules or microgranules obtained by granulation have a humidity content from 9 to 14 % with tolerance that can also be 1 percentage point.

The ceramic granules or microgranules are then dried to obtain slidable ceramic material in powder form. The humidity content of the dried ceramic microgranules is 4-7%, with tolerance that can also be 1 percentage point. In fact, depending on the composition of the raw materials of the recipe, also dried ceramic granules having humidity for example around 3% or around 8% can be considered to be suitable for pressing.

The method according to the invention then enables the slidable ceramic material to be stored in powder or microgranulate form after drying. It is in fact possible to take stored ceramic material in powder form to then supply a press for forming ceramic tiles.

Considering the total energy expenditure necessary for dry grinding a quantity QS of the raw materials of the recipe, wet grinding the remaining quantity QL of raw materials of the same recipe, granulating and drying the granules for producing slidable ceramic material in powder form, this energy expenditure is nevertheless less than that of traditional atomization. The water consumption of the method according to the invention is less than for traditional atomization, but also than in the production of microgranules by adding water, in the latter it may be necessary to dry, before dry grinding, the entire quantity of raw materials that are necessary for producing the desired production run or production batch of ceramic tiles. The method according to the invention involves drying, if necessary on the basis of the initial humidity of the raw materials of the recipe, a reduced quantity of such raw materials, i.e. the quantity of raw materials that is dry ground, whilst the water content of the raw materials of the recipe that are wet ground is used to obtain the slip to be used in the granulation step. For example, if with the method according to the invention, in order to run a desired production run of ceramic tiles, only 70% of the raw materials of the recipe necessary for the run is dry ground and the remaining 30% of raw materials is wet ground, then the method achieves not only reduced water consumption, but also reduced energy consumption than the known dry method, energy not having to be expended to evaporate the water from all the quantity of raw materials of the run.

The Applicant has established that the method proposed here enables an energy saving to be achieved in terms of thermal energy and thus CO₂ emissions to be reduced by about 55-65% and water consumption to be reduced by about 60-70%. Although this entails a possible electrical power increase of about 9-10%, due to the drying of the dosed raw materials by dry grinding QS, the energy balance of the method proposed here is more advantageous than the method entailing producing ceramic granules exclusively by atomization.

The slidable ceramic material in powder form obtained by the method steps according to the invention has features that are comparable with those of the atomized powder of known type with the same mixture composition, i.e. recipe composition.

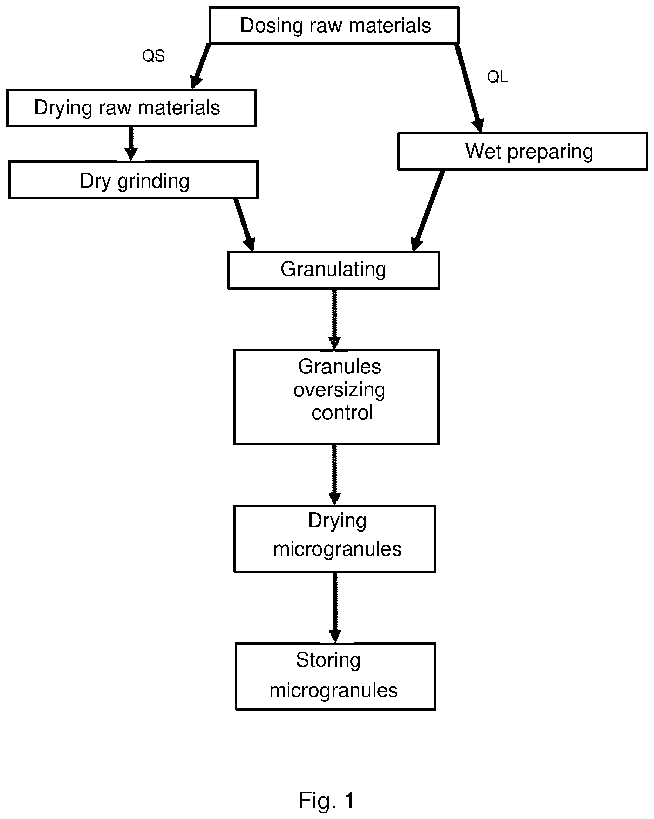

In Table 1 below, shown here below, parameters are listed that are characteristic of a sample of ceramic granules obtained with the method according to the present invention using the same recipe; the sample A was taken downstream of the granulometry check, i.e. after the overscreen material had been removed from the ceramic microgranules produced, and before final drying; sample A is respectively a slidable ceramic material in powder form obtained by the method illustrated in Figure 1 according to the embodiment in which the step of wet preparing comprises wet grinding and the reference is indicated by R, i.e. the atomized powder of the same composition, and thus the same recipe, which is taken as a reference.

**TABLE 1**

| **Properties** | **A** | **R** |
|---|---|---|
| Humidity | 9.51% | 4.79% |
| Apparent density (unplugged and wet powder) | 1083.6 g/l | 1001.37 g/l |
| Apparent density (unplugged and dry powder) | 980.55 | 953.40 g/l |
| Slidability | 18 sec. | 15 sec. |
| Residual at 45 micron (%) | 6.30% | 9.07% |
| Granulometric distribution (%) | | |
| - screen dimension (micron) | | |
| 1000 | 4.55% | 1.16% |
| 710 | 7.22% | 3.82% |
| 500 | 18.67% | 27.03% |
| 250 | 36.58% | 48.58% |
| 125 | 25.13% | 15.24% |
| 63 | 6.22% | 2.91% |
| below | 1.62% | 1.3% |

As can be observed from Table 1, already in a step preceding the final drying, the granulometric curve of the microgranulated powder approaches that of the atomized powder. Further, apart from the humidity, which after drying reaches a value comprised between 4% and 7%, the slidability of the sample A enables this ceramic material in powder to be used for the press forming di ceramic tiles, already in a step preceding drying, this last step increasing the slidability of the powder.

With the slidable ceramic powder of sample A, once it had been dried, ceramic tiles with the following features were produced, indicated in Table 2 shown here below. The tiles of sample A and those of reference R were produced in the same conditions, i.e. by the same process and apparatuses.

**TABLE 2**

| **Properties** | **A** | **R** |
|---|---|---|
| Fired thickness (mm) | 10.4 | 9.4 |
| Water absorption (%) | 0.055 | 0.03 |
| Breaking modulus (N/mm²) | 43.99 | 51.6 |
| Shrinkage (%) | 4.73 | 7.14 |

Table 2 shows that the quality of the ceramic granules is comparable to that of the atomized powder of the same recipe.

Experimentally, the Applicant has observed that, by adopting the method in the embodiment of Figure 2, in which an overscreen part of material is disaggregated and is delivered together with the ceramic microgranules that have passed the granulometric check, a granulometric curve is obtained in which the overscreen fractions are enormously reduced and the ceramic microgranules removed after screening and before final drying have a granulometric curve having the different granulometric fractions within the ranges shown in Table 3 shown below.

**TABLE 3**

| Screen (µm) | % |
|---|---|
| **1000** | 0.0-1.5 |
| **710** | 0.5-2.5 |
| **500** | 0.5-2.5 |
| **250** | 26.0-42.0 |
| **125** | 24.0-36.0 |
| **63** | 5.0-15.0 |
| **Bottom** | 1.0-10.0 |

One example of granulation can be summarized in the following Table 4:

**TABLE 4**

| **Properties** | **UM** | **Value** |
|---|---|---|
| humidity of the slip (used for granulation) | % | 32 |
| humidity of the dry ground material entering granulator | % | 1.5 |
| pressure of the slip injection circuit | (bar) | 65 |
| | 10⁵ Pa | |
| humidity of the granulate exiting the granulator | % | 12.95 |
| dimension of nozzle hole | mm | 0.48 |
| number of revolutions of the barrel (granulating chamber) | g/min | 11 |
| number of revolutions of the bar (stirrer-disgregating element) | g/min | 1193 |

With these granulation parameters, it was possible to obtain, upon exiting the granulating chamber and before the final drying step, a microgranulate having the following granulometric distribution:

**TABLE 5**

| **humidity exiting granulating chamber mgr (%)** | **> 1000 µm (%)** | **<1000>710 µm (%)** | **<710>500 µm (%)** | **<500>250 µm (%)** | **<250>125 µm (%)** | **<125>63 µm (%)** | **<63 µm (%)** |
|---|---|---|---|---|---|---|---|
| 12.95 | 17.70 | 5.53 | 11.63 | 23.74 | 21.79 | 15.96 | 6.16 |

Further experimental tests run by the Applicant are summarized in Table 6, shown below, in which the characterization parameters of two samples DV3 and DV4 of ceramic granules obtained by using the method of Figure 2 and compared with a reference atomized powder indicated with R2, of the same composition, and thus the same recipe as the produced ceramic granules. Samples DV3 and DV4 were both taken downstream of the drying step, i.e. in the storage zone. The sample DV3 was obtained by using, in the oversized granules check step, a check screen with mesh size measuring 0.9 mm x 0.9 mm, whereas the sample DV4 was obtained by using, in the oversized granules check step, a check screen with mesh size measuring 1.1 mm x 1.1 mm.

**TABLE 6**

| **Properties** | **Unit of measuremen t** | **DV3** | **DV4** | **R2** |
|---|---|---|---|---|
| Humidity | (%) | 6.43 | 7.12 | 4.58 |
| Apparent density (unplugged wet powder) | (g/l) | 1110 | 1114 | 1052 |
| Material density (unplugged dry powder) | (g/l) | 1038.6 | 1034.7 | 1003. 8 |
| Grinding residue 45 micron | (%) | 3.65 | 3.65 | 3.65 |
| Slidability in cone | (sec) | 5.75 | 5.78 | 6.25 |
| Granulometry- threshold dimension (micron) | | | | |
| 1000 | (%) | 0.00 | 3.49 | 1.05 |
| 710 | (%) | 0.57 | 10.42 | 2.25 |
| 500 | (%) | 28.53 | 22.70 | 19.05 |
| 250 | (%) | 44.79 | 36.54 | 57.17 |
| 125 | (%) | 22.58 | 23.27 | 13.71 |
| 63 | (%) | 4.41 | 2.80 | 5.53 |
| Bottom | (%) | 0.60 | 0.91 | 1,23 |

The grinding residue at 45 microns is a measurement of the dimension of the fine powder that makes up the atomized R2 or the ceramic microgranules of the samples DV3 and DV4 respectively and in all three powders there was the same value. Further, also the slidability of the samples is near the slidability of the reference R2.

With the slidable ceramic powder of the samples DV3 and DV4 ceramic tiles having the features indicated in Table 7 shown here below were produced with the same process and machines, the ceramic tiles being comparable with the features of ceramic tiles produced - with the same process and the same machines - by the reference atomized powder R2.

**TABLE7**

| **Properties** | **Unit of measurement** | **DV3** | **DV4** | **R2** |
|---|---|---|---|---|
| Absorption after firing | (%) | 0.09 | 0.09 | 0.08 |
| Shrinkage | (%) | 6.10 | 6.40 | 6.7 |
| Dry breaking load | (kg/cm²) | 19.48 | 21.11 | 15.78 |
| Fired tile breaking load (pressing 430 kg/cm²) | (kg/cm²) | 47.08 | 47.15 | 48.83 |

The dry breaking load is the breaking load of a formed tile that has been dried and before it has been fired. The values of Table 7 show that the microgranulated ceramic powder enables a quality of the finished ceramic tile to be obtained that is identical to what is obtainable with an atomized powder.

A further experimental test run by the Applicant is summarized in Table 8, shown below, in which the characterization parameters of a sample G3 of ceramic granules obtained by adopting the method of Figure 2 are indicated; the measured parameters are accompanied by those of an atomized reference powder indicated by R3, of the same composition, and thus the same recipe as the produced ceramic granules. The sample G3 was obtained by using, in the oversized granules check step, a check screen with mesh size measuring 0.9 mm x 0.9 mm,

**TABLE 8**

| Properties | Unit of measurement | **G3** | **R3** |
|---|---|---|---|
| Humidity | (%) | 7.58 | 3.54 |
| Material wet density | (g/l) | 1066 | 949.77 |
| Material dry density | (g/l) | 985.2 | 916.1 |
| Grinding residue 45 micron | (%) | 3,7 | 3.69 |
| Slidability in cone | (sec) | 6,72 | 6,79 |
| Granulometries - threshold dimension (micron) | Dry Laser Method | | |
| 1000 | (%) | 0.00 | 1.94 |
| 710 | (%) | 0.11 | 4.00 |
| 500 | (%) | 32.43 | 19.21 |
| 250 | (%) | 43.70 | 48.82 |
| 125 | (%) | 17.65 | 18.24 |
| 63 | (%) | 4.00 | 6.50 |
| Bottom | (%) | 2.10 | 1.30 |
| total | | 100.00 | 100.00 |

The granulometric distribution of the sample G3 and of the atomized powder R3 is obtained by a laser granulometer using dry powder method.

With the slidable ceramic powder of sample G3, ceramic tiles were produced having the features indicated in Table 9 shown here below, which were measured after the step of forming ceramic tiles and before the step of firing ceramic tiles. The ceramic tiles of sample G3 and those of reference R3 were produced on the same conditions, i.e. by the same process and the same apparatuses. The features of Table 9 were measured on testpieces measuring 50 mm x 100 mm before being fired.

**TABLE 9**

| **Properties** | **Unit of measurement** | **G3** | **R3** |
|---|---|---|---|
| Green testpiece thickness | (mm) | 6.90 | 7.00 |
| Green testpiece weight | (g) | 71.39 | 65.04 |
| Specific pressure applied | Kg_{f}/cm² | 432 | 432 |
| Green breaking weight | (kg/cm²) | 8.43 | 5.82 |
| Dry breaking weight | (kg/cm²) | 24.93 | 16.30 |

Table 9 shows that the breaking weight of the "green", i.e. of the tile formed by pressing but not yet dried, and the breaking weight of the "dry", i.e. of the tile formed by pressing and subsequently dried but not yet fired, are greater than those of the tile formed in the same conditions by the reference atomized powder R3.

Table 10, shown here below, shows the parameters adopted during the application of the method of Figure 2 used for the granulation of the sample G3.

**TABLE 10**

| **Properties** | **Unit of measurement** | **Value** |
|---|---|---|
| Rotation speed of stirrer-disgregating element | (rpm) | 1083 |
| Granulation chamber rotation speed | (rpm) | 11-13 |
| X axis tilt | (degrees) | 0 |
| Slip circuit pressure | (bar) | 10 |
| | (10⁵ Pa) | |
| Nozzles | (mm) | 1.3 |
| Slip density | (g/l) | 1640 |
| Viscosity (Ford cup 4 mm) - 15 °C | (sec) | 40 |

From what has been described above, the method according to the invention enables the prior art atomization step to be avoided and thus enables the consumption of fuel that is necessary for heating and removing water from the ceramic material during preparation treatment of the ceramic material to be reduced to make the ceramic material suitable for press forming. Reducing fuel consumption also reduces the emissions of carbon dioxide into the atmosphere, thus constituting a clear advantage for the environment. Owing to the method according to the invention, it is further possible to reduce the consumption of process water, not just with respect to a traditional method of wet production of atomized granules but also with respect to a known method of dry production of microgranules.

Further, the method according to the invention does not modify the wet grinding steps that occur upstream of the production of the slidable ceramic material and does not modify the pressing steps downstream of the production of the slidable ceramic material, thus enabling this method to be adopted, applying it in existing systems for the production of ceramic tiles.

## Claims

1. Method for producing ceramic microgranules arranged for constituting the body of ceramic tiles formed by pressing comprising the steps of:
- setting up raw materials comprising clays, inerts and fluxes according to a defined recipe of ceramic body mix of said ceramic tiles;
- dry grinding a quantity of said raw materials to obtain a dry mixture of powders of said raw materials;
- preparing a liquid mixture with a further quantity of said raw materials and an aqueous vehicle;
- granulating by particle growth said dry mixture of powders to obtain said ceramic microgranules;
wherein, except for said aqueous vehicle, the dry mixture of powders and the liquid mixture have the same composition as said defined recipe of ceramic body mix;
**characterized in that** said granulating by particle growth comprises:
- feeding a horizontal axis (X) granulating chamber continuously with said dry mixture;
- injecting said liquid mixture in the form of drops onto a bed of said dry mixture of powders that through the effect of the rotation of the granulating chamber and of gravity is arranged on a tilted plane with respect to a cross section of the granulating chamber; and
- rotating said granulating chamber around said horizontal axis (X) during said feeding and during said injecting to obtain said ceramic granules by nucleation and growth.

2. Method according to claim 1, wherein said preparing a liquid mixture comprises wet grinding said further quantity of said raw materials in said aqueous vehicle.

3. Method according to claim 1, wherein said preparing a liquid mixture comprises:
- dry pre-grinding said further quantity of said raw materials to obtain a further dry mixture and
- mixing said aqueous vehicle with said further dry mixture.

4. Method according to claim 3, wherein said dry pre-grinding said further quantity of said raw materials and said dry grinding occur simultaneously.

5. Method according to claim 1, wherein said preparing a liquid mixture comprises:
- dividing components of said further quantity of said raw materials into hard materials and plastic materials;
- dry pre-grinding said hard materials to obtain ground dry powder of said hard materials;
- dissolving said plastic materials in said aqueous vehicle;
- mixing said aqueous vehicle with said ground dry powder to obtain said liquid mixture.

6. Method according to claim 1, wherein said injecting in the form of drops comprises delivering to said granulating chamber a quantity of said liquid mixture proportional to a flow rate of said dry mixture.

7. Method according to claim 6, wherein said quantity of said liquid mixture varies from 27% to 40% in weight of solid material and said dry mixture varies from 60% to 73% of solid material of said recipe.

8. Method according to claim 1 or 6 or 7, wherein said injecting comprises injecting said liquid mixture by nozzles distributed along a bar inside said granulating chamber.

9. Method according to claim 1, wherein said rotating said granulating chamber is provided at a rotation speed of between 8 and 22 rpm.

10. Method according to claim 1 or 9, wherein said granulating further comprises driving a stirring-disgregating element provided inside said granulating chamber to control said growth and limit a maximum dimension of granules during formation of the granules.

11. Method according to claim 10, wherein said driving comprises rotating said stirring-disgregating element around an axis parallel to said horizontal axis (X) in counter-rotation with respect to said granulating chamber.

12. Method according to claim 11, wherein said rotating in counter-rotation comprises rotating said stirring-disgregating element at a speed between 800 and 1800 rpm.

13. Method according to any one of the preceding claims, wherein said dry mixture has a humidity content that is less than or the same as 2% by weight.

14. Method according to any one of the preceding claims, wherein said liquid mixture has a humidity content from 32 to 40% by weight.

15. Method according to any one of the preceding claims, wherein said injecting comprises injecting said liquid mixture at a pressure from 5 to 100 bar.

16. Method according to any one of the preceding claims, wherein after said granulating said ceramic microgranules have a humidity content from 9 to 14 %.

17. Method according to any one of the preceding claims, wherein after said granulating there is provided checking the granulometry of said ceramic granules.

18. Method according to claim 17, wherein said checking the granulometry comprises:
- separating a fraction of oversized granules having dimensions greater than a certain threshold from controlled ceramic microgranules;
- disgregating said oversized ceramic granules to obtain disgregated granules;
- adding said disgregated granules to said ceramic microgranules.

19. Method according to any one of the preceding claims, wherein after said granulating there is provided drying said ceramic microgranules to obtain sliding ceramic material in the form of granules that is suitable for feeding a ceramic press for forming said ceramic tiles.

20. Method according to claim 19, wherein after said drying there is provided storing said slidable ceramic material in the form or granules and/or feeding a ceramic press with said slidable ceramic material in the form of granules for forming said ceramic tiles.

21. Method according to claim 19 or 20, wherein during said drying, there is provided recovering fine ceramic material and sending said fine ceramic material to said granulating.

22. Method according to any one of the preceding claims, wherein said setting up raw materials comprises dosing said raw materials on the basis of said recipe.

## Patentansprüche

1. Verfahren zum Herstellen von keramischem Mikrogranulat, das zum Erzeugen des Körpers von Keramikfliesen, die durch Pressen ausgebildet sind, angeordnet ist, umfassend die Schritte:
- Vorbereiten von Rohmaterialien, umfassend Tone, Inertstoffe und Flussmittel, gemäß einer definierten Rezeptur für eine Keramikmassemischung der Keramikfliesen;
- Trockenmahlen einer Menge der Rohmaterialien, um eine Trockenmischung aus Pulvern der Rohmaterialien zu erhalten;
- Zubereiten einer flüssigen Mischung mit einer weiteren Menge der Rohmaterialien und einem wässrigen Träger;
- Granulieren, durch Partikelwachstum, der Trockenmischung aus Pulvern, um das keramische Mikrogranulat zu erhalten;
wobei, mit Ausnahme des wässrigen Trägers, die Trockenmischung aus Pulvern und die flüssige Mischung die gleiche Zusammensetzung wie die definierte Rezeptur der Keramikmassemischung aufweisen;
**dadurch gekennzeichnet, dass** das Granulieren durch Partikelwachstum umfasst:
- kontinuierliches Beschicken einer Granulierkammer mit horizontaler Achse (X) mit der Trockenmischung;
- Einspritzen der flüssigen Mischung in Form von Tropfen auf ein Bett aus der Trockenmischung aus Pulvern, das durch die Wirkung der Drehung der Granulierkammer und von Schwerkraft auf einer geneigten Ebene in Bezug auf einen Querschnitt der Granulierkammer angeordnet ist; und
- Drehen der Granulierkammer um die horizontale Achse (X) während des Beschickens und während des Einspritzens, um das Keramikgranulat durch Keimbildung und Wachstum zu erhalten.

2. Verfahren nach Anspruch 1, wobei das Zubereiten einer flüssigen Mischung ein Nassmahlen der weiteren Menge der Rohmaterialien in dem wässrigen Träger umfasst.

3. Verfahren nach Anspruch 1, wobei das Zubereiten einer flüssigen Mischung umfasst:
- Trockenvormahlen der weiteren Menge der Rohmaterialien, um eine weitere Trockenmischung zu erhalten und
- Mischen des wässrigen Trägers mit der weiteren Trockenmischung.

4. Verfahren nach Anspruch 3, wobei das Trockenvormahlen der weiteren Menge der Rohmaterialien und das Trockenmahlen gleichzeitig erfolgen.

5. Verfahren nach Anspruch 1, wobei das Zubereiten einer flüssigen Mischung umfasst:
- Aufteilen von Bestandteilen der weiteren Menge der Rohmaterialien in Hartmaterialien und Kunststoffmaterialien;
- Trockenvormahlen der Hartmaterialien, um gemahlenes Trockenpulver der Hartmaterialien zu erhalten;
- Lösen der Kunststoffmaterialien in dem wässrigen Träger;
- Mischen des wässrigen Trägers mit dem gemahlenen Trockenpulver, um die flüssige Mischung zu erhalten.

6. Verfahren nach Anspruch 1, wobei das Einspritzen in Form von Tropfen ein Zuführen in die Granulierkammer einer Menge der flüssigen Mischung, die proportional zu einer Durchflussrate der Trockenmischung ist, umfasst.

7. Verfahren nach Anspruch 6, wobei die Menge der flüssigen Mischung von 27% bis 40% des Gewichts des festen Materials und die Trockenmischung von 60% bis 73% des festen Materials der Rezeptur variiert.

8. Verfahren nach Anspruch 1, 6 oder 7, wobei das Einspritzen das Einspritzen der flüssigen Mischung durch Düsen, die entlang einer Stange im Inneren der Granulierkammer verteilt sind, umfasst.

9. Verfahren nach Anspruch 1, wobei das Drehen der Granulierkammer mit einer Drehgeschwindigkeit von zwischen 8 und 22 U/min bereitgestellt wird.

10. Verfahren nach Anspruch 1 oder 9, wobei das Granulieren ferner das Antreiben eines Rühr-Zerkleinerungselements umfasst, das im Inneren der Granulierkammer bereitgestellt ist, um das Wachstum zu steuern und eine maximale Abmessung von Granulat während der Ausbildung des Granulats zu begrenzen.

11. Verfahren nach Anspruch 10, wobei das Antreiben das Drehen des Rühr-Zerkleinerungselements um eine Achse parallel zu der horizontalen Achse (X) in Gegendrehung zu der Granulierkammer umfasst.

12. Verfahren nach Anspruch 11, wobei das Drehen in Gegendrehung das Drehen des Rühr-Zerkleinerungselements mit einer Geschwindigkeit zwischen 800 und 1800 U/min umfasst.

13. Verfahren nach einem der vorstehenden Ansprüche, wobei die Trockenmischung einen Feuchtigkeitsgehalt, der geringer als oder gleich 2 Gew.-% ist, aufweist.

14. Verfahren nach einem der vorstehenden Ansprüche, wobei die flüssige Mischung einen Feuchtigkeitsgehalt von 32 bis 40 Gew.-% aufweist.

15. Verfahren nach einem der vorstehenden Ansprüche, wobei das Einspritzen das Einspritzen der flüssigen Mischung bei einem Druck von 5 bis 100 Bar umfasst.

16. Verfahren nach einem der vorstehenden Ansprüche, wobei das keramische Mikrogranulat nach dem Granulieren einen Feuchtigkeitsgehalt von 9 bis 14% aufweist.

17. Verfahren nach einem der vorstehenden Ansprüche, wobei nach dem Granulieren eine Überprüfung der Granulometrie des keramischen Granulats erfolgt.

18. Verfahren nach Anspruch 17, wobei die Überprüfung der Granulometrie umfasst:
- Abtrennen einer Fraktion von übergroßem Granulat, das Abmessungen aufweist, die über einem gewissen Schwellenwert von kontrollierten keramischem Mikrogranulat liegen;
- in Bestandteile Zerlegen des übergroßen keramischen Granulats, um zerlegtes Granulat zu erhalten;
- Hinzufügen des zerlegten Granulats zu dem keramischen Mikrogranulat.

19. Verfahren nach einem der vorstehenden Ansprüche, wobei nach dem Granulieren ein Trocknen des keramischen Mikrogranulats bereitgestellt wird, um ein gleitendes Keramikmaterial in Form von Granulat zu erhalten, das zum Beschicken einer Keramikpresse zum Ausbilden der Keramikfliesen geeignet ist.

20. Verfahren nach Anspruch 19, wobei nach dem Trocknen das Lagern des gleitfähigen Keramikmaterials in Granulatform und/oder das Beschicken einer Keramikpresse mit dem gleitfähigen Keramikmaterial in Granulatform zum Ausbilden der Keramikfliesen bereitgestellt wird.

21. Verfahren nach Anspruch 19 oder 20, wobei während des Trocknens die Rückgewinnung von feinem Keramikmaterial und das Senden des feinen Keramikmaterials an die Granulierung bereitgestellt wird.

22. Verfahren nach einem der vorstehenden Ansprüche, wobei das Vorbereiten der Rohmaterialien ein Dosieren der Rohmaterialien auf Basis der Rezeptur umfasst.

## Revendications

1. Procédé de fabrication de microgranules en céramique destinés à constituer le corps de carreaux en céramique formés par pressage, comprenant les étapes consistant à:
- mettre en place des matières premières comprenant des argiles, des matières inertes et des flux selon une recette définie d'un mélange de corps céramique desdits carreaux en céramique;
- broyer à sec une quantité desdites matières premières afin d'obtenir un mélange sec de poudres desdites matières premières;
- préparer un mélange liquide avec une quantité supplémentaire desdites matières premières et un véhicule aqueux;
- granuler par croissance de particules ledit mélange sec de poudres afin d'obtenir lesdits microgranules en céramique;
dans lequel, à l'exception dudit véhicule aqueux, le mélange sec de poudres et le mélange liquide ont la même composition que ladite recette définie d'un mélange de corps céramique;
**caractérisé en ce que** ladite granulation par croissance de particules comprend:
- l'alimentation continue d'une chambre de granulation à axe horizontal (X) avec ledit mélange sec;
- l'injection dudit mélange liquide sous forme de gouttes sur un lit dudit mélange sec de poudres qui, sous l'effet de la rotation de la chambre de granulation et de la gravité, est disposé sur un plan incliné par rapport à une section transversale de la chambre de granulation; et
- la rotation de ladite chambre de granulation autour dudit axe horizontal (X) pendant ladite alimentation et ladite injection afin d'obtenir lesdits granules en céramique par nucléation et croissance.

2. Procédé selon la revendication 1, dans lequel ladite préparation d'un mélange liquide comprend le broyage humide de ladite quantité supplémentaire desdites matières premières dans ledit véhicule aqueux.

3. Procédé selon la revendication 1, dans lequel ladite préparation d'un mélange liquide comprend:
- le pré-broyage à sec de ladite quantité supplémentaire desdites matières premières afin d'obtenir un mélange sec supplémentaire et
- le mélange dudit véhicule aqueux avec ledit mélange sec supplémentaire.

4. Procédé selon la revendication 3, dans lequel ledit pré-broyage à sec de ladite quantité supplémentaire desdites matières premières et ledit broyage à sec se produisent simultanément.

5. Procédé selon la revendication 1, dans lequel ladite préparation d'un mélange liquide comprend:
- la division de composants de ladite quantité supplémentaire desdites matières premières en matériaux durs et en matériaux plastiques;
- le pré-broyage à sec desdits matériaux durs afin d'obtenir une poudre sèche broyée desdits matériaux durs;
- la dissolution desdits matériaux plastiques dans ledit véhicule aqueux;
- le mélange dudit véhicule aqueux avec ladite poudre sèche broyée afin d'obtenir ledit mélange liquide.

6. Procédé selon la revendication 1, dans lequel ladite injection sous forme de gouttes comprend la distribution vers ladite chambre de granulation d'une quantité dudit mélange liquide proportionnelle à un débit dudit mélange sec.

7. Procédé selon la revendication 6, dans lequel ladite quantité dudit mélange liquide varie de 27% à 40% en poids de matériau solide et ledit mélange sec varie de 60% à 73% de matériau solide de ladite recette.

8. Procédé selon la revendication 1 ou 6 ou 7, dans lequel ladite injection comprend l'injection dudit mélange liquide par des buses réparties le long d'une barre à l'intérieur de ladite chambre de granulation.

9. Procédé selon la revendication 1, dans lequel ladite rotation de ladite chambre de granulation est assurée à une vitesse de rotation comprise entre 8 et 22 tr/min.

10. Procédé selon la revendication 1 ou 9, dans lequel ladite granulation comprend en outre l'entraînement d'un élément d'agitation-désagrégation prévu à l'intérieur de ladite chambre de granulation afin de commander ladite croissance et de limiter une dimension maximale de granules pendant la formation des granules.

11. Procédé selon la revendication 10, dans lequel ledit entraînement comprend la rotation dudit élément de d'agitation-désagrégation autour d'un axe parallèle audit axe horizontal (X) en contre-rotation par rapport à ladite chambre de granulation.

12. Procédé selon la revendication 11, dans lequel ladite rotation en contre-rotation comprend la rotation dudit élément de d'agitation-désagrégation à une vitesse comprise entre 800 et 1800 tr/min.

13. Procédé selon l'une quelconque des revendications précédentes, dans lequel ledit mélange sec a une teneur en humidité qui est inférieure ou égale à 2% en poids.

14. Procédé selon l'une quelconque des revendications précédentes, dans lequel ledit mélange liquide a une teneur en humidité de 32 à 40% en poids.

15. Procédé selon l'une quelconque des revendications précédentes, dans lequel ladite injection comprend l'injection dudit mélange liquide à une pression de 5 à 100 bars.

16. Procédé selon l'une quelconque des revendications précédentes, dans lequel, après ladite granulation, lesdits microgranules en céramique ont une teneur en humidité de 9 à 14%.

17. Procédé selon l'une quelconque des revendications précédentes, dans lequel, après ladite granulation, il est prévu de vérifier la granulométrie desdits granules en céramique.

18. Procédé selon la revendication 17, dans lequel ladite vérification de la granulométrie comprend:
- la séparation d'une fraction de granules surdimensionnés ayant des dimensions supérieures à un certain seuil à partir des microgranules en céramique commandés;
- la désagrégation desdits granules en céramique surdimensionnés afin d'obtenir des granules désagrégés;
- l'ajout desdits granules désagrégés auxdits microgranules en céramique.

19. Procédé selon l'une quelconque des revendications précédentes, dans lequel, après ladite granulation, il est prévu de sécher lesdits microgranules en céramique pour obtenir un matériau céramique coulissant sous forme de granules qui convient à l'alimentation d'une presse à céramique afin de former lesdits carreaux en céramique.

20. Procédé selon la revendication 19, dans lequel, après ledit séchage, il est prévu de stocker ledit matériau céramique coulissant sous forme de granules et/ou d'alimenter une presse à céramique avec ledit matériau céramique coulissant sous forme de granules afin de former lesdits carreaux en céramique.

21. Procédé selon la revendication 19 ou 20, dans lequel, pendant ledit séchage, il est prévu de récupérer un matériau céramique fin et d'envoyer ledit matériau céramique fin vers ladite granulation.

22. Procédé selon l'une quelconque des revendications précédentes, dans lequel ladite mise en place de matières premières comprend le dosage desdites matières premières sur la base de ladite recette.
